# EUROPEAN PATENT SPECIFICATION

(11) **EP 3 364 023 B1**
(45) Date of publication and mention of the grant of the patent: **30.03.2022**
(21) Application number: 17156986.6
(22) Date of filing: 20.02.2017
(51) Int. Cl.: F03D 13/10, F03D 80/50, B66C 1/10

(54) **SYSTEM AND METHOD FOR REMOVING OR INSTALLING A MAIN SHAFT OF A WIND TURBINE**
SYSTEM UND VERFAHREN ZUM ENTFERNEN ODER INSTALLIEREN EINER HAUPTWELLE EINER WINDTURBINE
SYSTÈME ET PROCÉDÉ POUR RETIRER OU INSTALLER UN ARBRE PRINCIPAL D'UNE ÉOLIENNE

(43) Date of publication of application: 22.08.2018
(73) Proprietor: General Electric Company, Schenectady, NY 12345 (US)
(72) Inventor: THOMAS, Gregory Clarence, Schenectady, NY 12345 (US); OHL, Richard Arland Jr., Schenectady, NY 12345 (US); SIGNORE, Jonathan Paul, Schenectady, NY 12345 (US); TROJCAK, Charles Wade, Abilene, TX 79601 (US)
(74) Representative: de Rooij, Mathieu Julien

(56) References cited:
- EP-A1- 1 291 521
- DE-A1-102010 016 840
- DE-U1- 29 924 115
- US-A1- 2014 334 908

## Description

The present disclosure relates generally to wind turbines, and more particularly to systems and methods for removing and/or installing a main shaft to and from a nacelle located atop a wind turbine tower.

Wind power is considered one of the cleanest, most environmentally friendly energy sources presently available, and wind turbines have gained increased attention in this regard. A modern wind turbine typically includes a tower, a generator, a gearbox, a nacelle, and one or more rotor blades. The nacelle includes a rotor assembly coupled to the gearbox and to the generator. The rotor assembly and the gearbox are mounted on a bedplate support frame located within the nacelle. More specifically, in many wind turbines, the gearbox is mounted to the bedplate via one or more torque supports or arms. The one or more rotor blades capture kinetic energy of wind using known airfoil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy that may be deployed to a utility grid.

More specifically, the majority of commercially available wind turbines utilize multistage geared drivetrains to connect the turbine blades to electrical generators. The wind turns the turbine blades, which spin a low speed shaft, i.e. the main shaft. The main shaft is coupled to an input shaft of a gearbox, which has a higher speed output shaft connected to a generator. Thus, the geared drivetrain aims to increase the velocity of the mechanical motion. Further, the gearbox and the generator are typically supported by one or more bearings and mounted to the bedplate via one or more torque arms or supports.

Over time, the main shaft and associated bearings may become worn and/or damaged due to normal operating loads and forces from the wind acting on the wind turbine components. Unfortunately, repair of main shaft and the main bearings often requires the turbine head to be removed from atop the nacelle and transported to a factory, which can be very time-consuming and expensive.

Thus, the art is continuously seeking new and improved systems and methods for repairing and/or replacing a main shaft of the wind turbine. See, for examples DE 299 24 115 Ul. Accordingly, the present subject matter is directed to a system and method for removing and/or installing a main shaft to and from a nacelle located atop a wind turbine tower that addresses the aforementioned issues.

Various aspects and advantages of the invention will be set forth in part in the following description, or may be clear from the description.

In one aspect, the present disclosure is directed to a nacelle installed atop a wind turbine tower of a wind turbine including a rail system for removing or installing a main shaft of a drivetrain assembly of the wind turbine to and from the nacelle, as defined in appended claim 1.

In one embodiment, each of the sliding components may include at least one rolling element configured within each track and at least one strap connected between each rolling element and the main shaft. For example, in particular embodiments, the rail system may also include a sliding component configured with a forward end of the main shaft and a sliding component configured at an aft end of the main shaft, e.g. so as to provide balanced support to main shaft.

In additional embodiments, the straps of the sliding components may be configured circumferentially around the main shaft. Alternatively, the straps may be secured to a side location of the main shaft.

In further embodiments, the parallel support arms may be further supported, e.g. by securing at least one rod component perpendicularly between the parallel support arms. In another embodiment, the rail system may include at least one structural support configured with each of the parallel support arms. In such embodiments, the structural supports may be secured to a stationary component of the wind turbine, e.g. the bedplate, via one or more fasteners.

According to the invention, the rail system may include a push/pull component configured to push or pull the main shaft during removal and/or installation thereof. More specifically, the push/pull component is mounted to a bearing housing of the main shaft.

In another aspect, the present disclosure is directed to a method for removing a main shaft of a drivetrain assembly of a wind turbine from a nacelle installed atop a wind turbine tower, as defined in appended claim 8.

Thus, the method also includes lowering the main shaft to a ground location.

More specifically, in one embodiment, the method may include lowering the main shaft to the ground location via a crane.

The invention includes securing parallel support arms above the main shaft. More specifically, the parallel support arms may be mounted on opposing sides of the main shaft. In addition, each of the parallel support arms includes a track.

In another embodiment, the method may include securing at least one rod component perpendicularly between the parallel support arms, e.g. so as to provide further support to the rail system. In addition, in further embodiments, the method may include securing a structural support between each of the parallel support arms and a bedplate of the wind turbine via one or more fasteners.

According to the invention, the method includes mounting a push/pull component to a bearing housing of the main shaft. Thus, the push/pull component is configured to push or pull the main shaft during removal or installation thereof.

In yet another aspect, the present disclosure is directed to a method for installing a main shaft of a drivetrain assembly of a wind turbine within a nacelle installed atop a wind turbine tower, as defined in appended claim 8.

Further, the method includes lifting the main shaft from a ground location to the nacelle installed atop the tower. The method also includes securing the main shaft to the sliding component. In addition, the method includes horizontally sliding the main shaft within the nacelle via the sliding component. It should be understood that the method may further include any of the additional steps and/or features as described herein.

Various features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

In the drawings:
FIG. 1 illustrates a perspective view of a wind turbine according to one embodiment of the present disclosure;
FIG. 2 illustrates a perspective view of a simplified, internal view of one embodiment of a nacelle of a wind turbine according to the present disclosure;
FIG. 3 illustrates a perspective view of one embodiment of a drivetrain assembly according to the present disclosure, particularly illustrating the main shaft of the drivetrain assembly;
FIG. 4 illustrates a side, cross-sectional view of one embodiment of the rail system configured with the main shaft according to the present disclosure, particularly illustrating the main shaft in its installed position within the nacelle of the wind turbine;
FIG. 5 illustrates a perspective view of one embodiment of a support component of the rail system of the present disclosure, particularly illustrating a rolling element configured within the track thereof;
FIG. 6 illustrates a side, cross-sectional view of one embodiment of the rail system configured with the main shaft according to the present disclosure, particularly illustrating the main shaft in its uninstalled position;
FIG. 7 illustrates a top view of one embodiment of the rail system configured with the main shaft according to the present disclosure, particularly illustrating the main shaft in its installed position within the nacelle of the wind turbine;
FIG. 8 illustrates a top view of one embodiment of the rail system configured with the main shaft according to the present disclosure, particularly illustrating the main shaft in its uninstalled position;
FIG. 9 illustrates a flow diagram of a method for removing a main shaft of a drivetrain assembly of a wind turbine from a nacelle installed atop a wind turbine tower according to the present disclosure; and
FIG. 10 illustrates a flow diagram of a method for installing a main shaft of a drivetrain assembly of a wind turbine within a nacelle installed atop a wind turbine tower according to the present disclosure.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims.

Generally, the present disclosure is directed to a nacelle according to claim 1 and to a method according to claim 8. The rail system generally includes parallel support arms mounted substantially horizontal to the main shaft of the drivetrain assembly. Further, the rail system also includes at least one sliding component configured with each of the support arms. More specifically, the sliding components are connected between the support arms and the main shaft and generally slid along a track of the support arms. Thus, the sliding components are configured to move horizontally with respect to the parallel support arms so as to slide the main shaft between an installed position and an uninstalled position.

The present nacelle and method includes many advantages not present in the prior art. For example, the present disclosure allows the main shaft of the wind turbine to be easily installed and/or replaced in the field, without having to transport the shaft to a factory. Thus, the present disclosure reduces cost and logistics associated with returning the wind turbine to service due to damage and/or replacement of the main shaft.

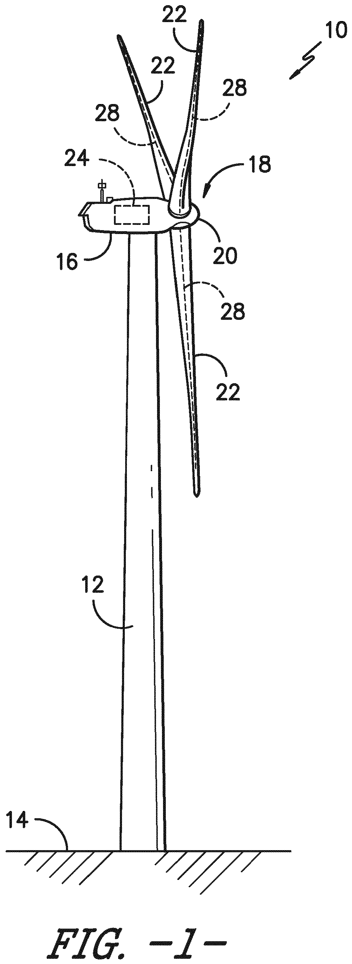

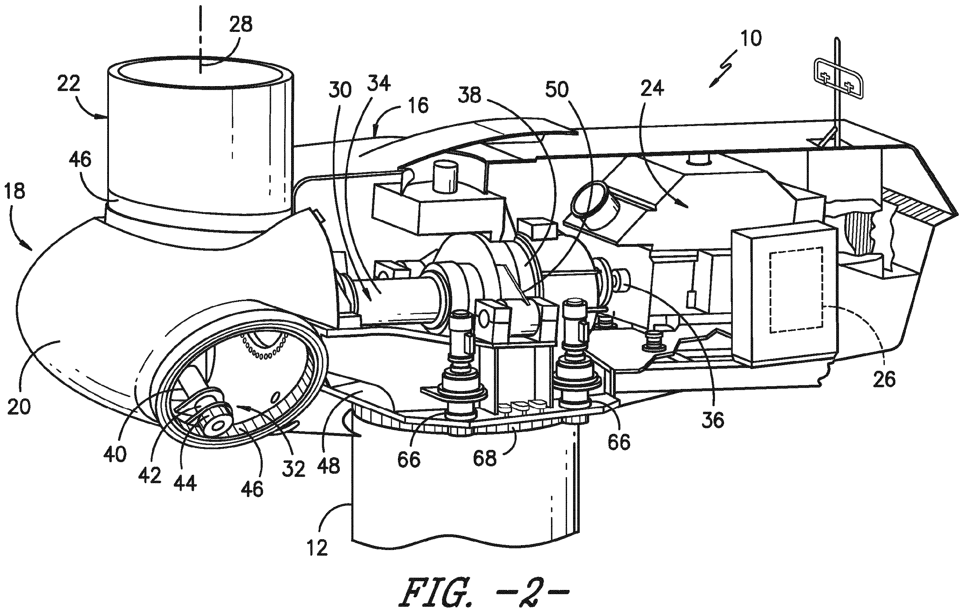

Referring now to the drawings, FIG. 1 illustrates a perspective view of one embodiment of a wind turbine 10 according to the present disclosure. As shown, the wind turbine 10 generally includes a tower 12 extending from a support surface 14, a nacelle 16 mounted on the tower 12, and a rotor 18 coupled to the nacelle 16. The rotor 18 includes a rotatable hub 20 and at least one rotor blade 22 coupled to and extending outwardly from the hub 20. For example, in the illustrated embodiment, the rotor 18 includes three rotor blades 22. However, in an alternative embodiment, the rotor 18 may include more or less than three rotor blades 22. Each rotor blade 22 may be spaced about the hub 20 to facilitate rotating the rotor 18 to enable kinetic energy to be transferred from the wind into usable mechanical energy, and subsequently, electrical energy. For instance, the hub 20 may be rotatably coupled to an electric generator 24 (FIG. 2) positioned within the nacelle 16 to permit electrical energy to be produced.

The wind turbine 10 may also include a wind turbine controller 26 centralized within the nacelle 16. However, in other embodiments, the controller 26 may be located within any other component of the wind turbine 10 or at a location outside the wind turbine. Further, the controller 26 may be communicatively coupled to any number of the components of the wind turbine 10 in order to control the components thereof. In addition, the controller 26 may be communicatively coupled to the rail system 60 as described herein so as to provide automatic control thereof. As such, the controller 26 may include a computer or other suitable processing unit. Thus, in several embodiments, the controller 26 may include suitable computer-readable instructions that, when implemented, configure the controller 26 to perform various different functions, such as receiving, transmitting and/or executing wind turbine control signals and/or performing the various method steps as described herein.

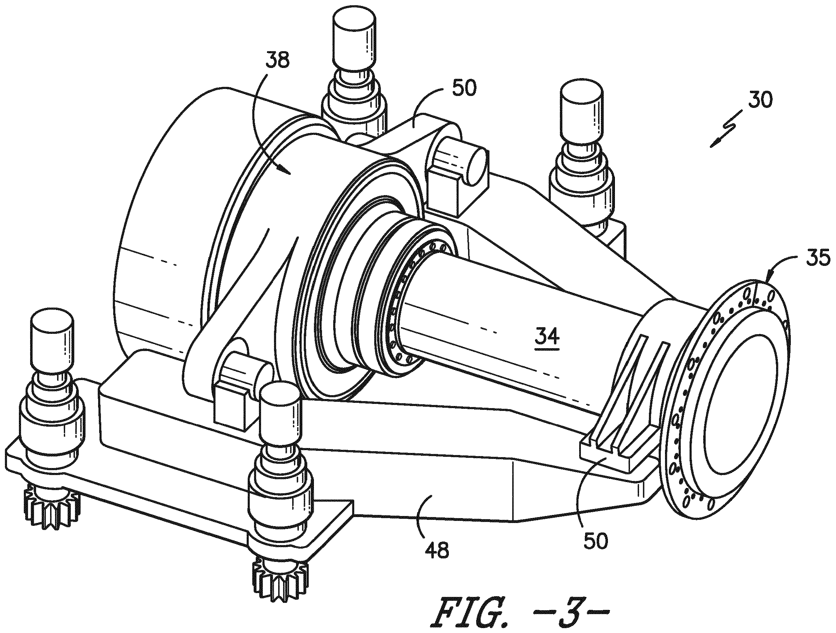

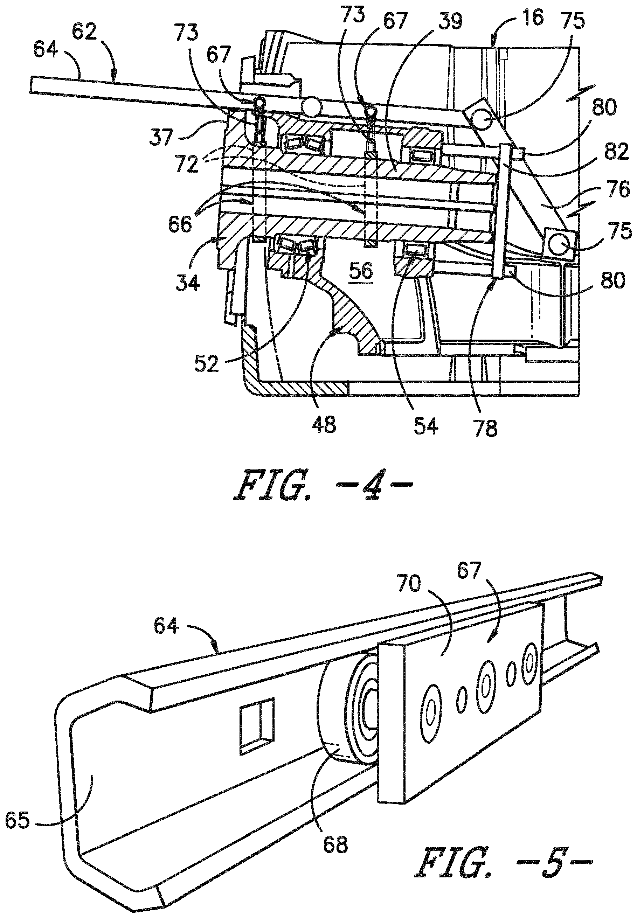

Referring now to FIG. 2, a simplified, internal view of one embodiment of the nacelle 16 of the wind turbine 10 shown in FIG. 1 is illustrated, particularly illustrating the drivetrain assembly 30. As shown, the drivetrain assembly 30 includes the generator 24, which may be coupled to the rotor 18 for producing electrical power from the rotational energy generated by the rotor 18. For example, as shown in FIGS. 2 and 3, the rotor 18 may include a rotor or main shaft 34 coupled to the hub 20 via a main shaft flange 35 for rotation therewith. The main shaft 34 may, in turn, be rotatably coupled to a generator shaft 36 of the generator 24 through a gearbox 38 connected to a bedplate support frame 48 by a torque support 50. More specifically, as shown in FIG. 4, the main shaft 34 is typically supported by one or more bearings 52, 54. For example, as shown, a forward end 37 of the shaft 34 may be supported by a first bearing 52 and an aft end 39 of the shaft 34 may be supported by a second bearing 54. Further, as shown, the bearings 52, 54 may be mounted to the bedplate 48 of the nacelle 16 via one or more torque supports 50.

As is generally understood, the main shaft 34 may provide a low speed, high torque input to the gearbox 38 in response to rotation of the rotor blades 22 and the hub 20. The gearbox 38 may then be configured to convert the low speed, high torque input to a high speed, low torque output to drive the generator shaft 36 and, thus, the generator 24.

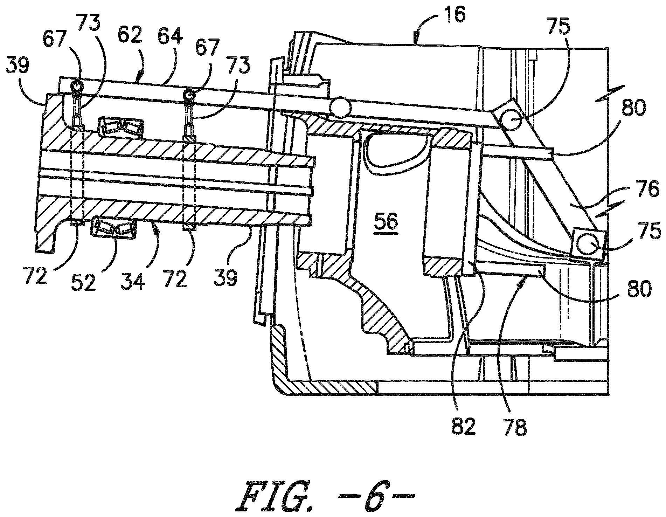

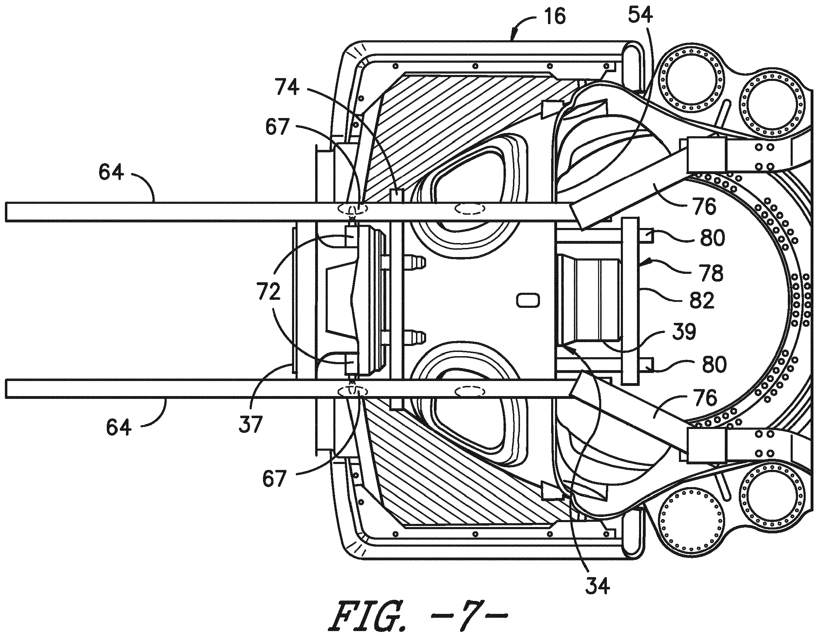

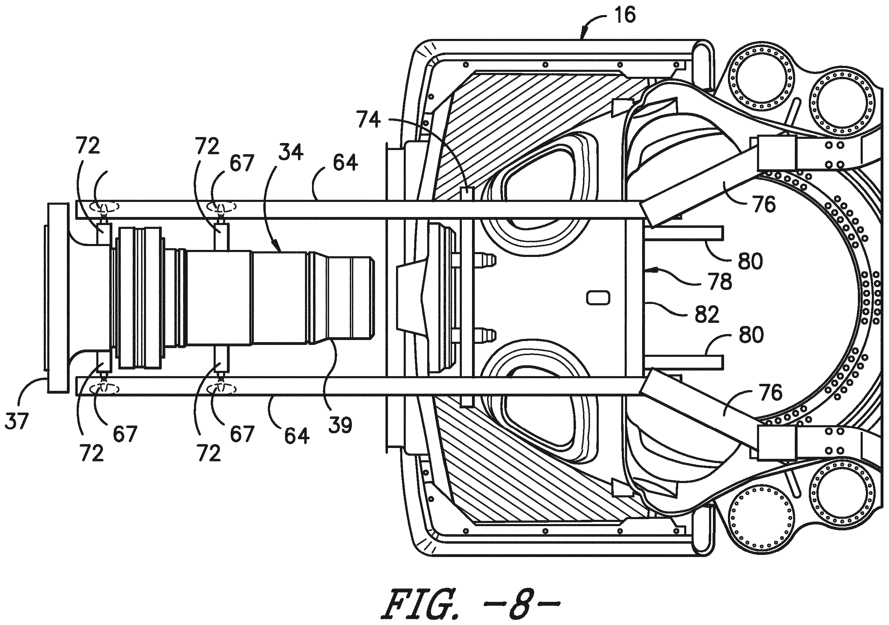

Each rotor blade 22 may also include a pitch adjustment mechanism 32 configured to rotate each rotor blade 22 about its pitch axis 28. Further, each pitch adjustment mechanism 32 may include a pitch drive motor 40 (e.g., any suitable electric, hydraulic, or pneumatic motor), a pitch drive gearbox 42, and a pitch drive pinion 44. In such embodiments, the pitch drive motor 40 may be coupled to the pitch drive gearbox 42 so that the pitch drive motor 40 imparts mechanical force to the pitch drive gearbox 42. Similarly, the pitch drive gearbox 42 may be coupled to the pitch drive pinion 44 for rotation therewith. The pitch drive pinion 44 may, in turn, be in rotational engagement with a pitch bearing 46 coupled between the hub 20 and a corresponding rotor blade 22 such that rotation of the pitch drive pinion 44 causes rotation of the pitch bearing 46. Thus, in such embodiments, rotation of the pitch drive motor 40 drives the pitch drive gearbox 42 and the pitch drive pinion 44, thereby rotating the pitch bearing 46 and the rotor blade 22 about the pitch axis 28. Similarly, the wind turbine 10 may include one or more yaw drive mechanisms 66 communicatively coupled to the controller 26, with each yaw drive mechanism(s) 66 being configured to change the angle of the nacelle 16 relative to the wind (e.g., by engaging a yaw bearing 68 of the wind turbine 10). Referring now to FIGS. 4-8, various views of the rail system 60 for removing and/or installing the main shaft 34 to and from the nacelle 16 located atop the wind turbine tower 12 (FIG. 1) are illustrated. More specifically, as shown in FIGS. 4 and 6, side cross-sectional views of one embodiment of the rail system 60 configured with the main shaft 34 of the drivetrain assembly 30 according to the present disclosure are illustrated, particularly illustrating the main shaft 34 in its installed position within the nacelle 16 and in its uninstalled position, respectively. Further, FIGS 7 and 8 illustrates top views of the main shaft 34 of the rail system 60 configured with the main shaft 34 of the drivetrain assembly 30 according to the present disclosure, particularly illustrating the main shaft 34 in its installed position within the nacelle 16 and in its uninstalled position, respectively.

More specifically, as shown generally in the figures, the rail system 60 includes at least one support component 62 configured to support the main shaft 34. According to the invention, and as shown in FIGS. 4 and 6, the support component(s) 62 include parallel support arms 64. Further, as shown particularly in FIGS. 7 and 8, the support component(s) 62 are configured above the main shaft 34. In addition, the support component(s) 62 may be configured on a side of the main shaft 34. Further, as shown, the support component(s) 62 are configured horizontally with respect to the main shaft 34, e.g. so as to allow for horizontal movement of the main shaft 34.

Thus, as shown in FIGS. 4-8, the rail system 60 also includes at least one sliding component 66 configured with each of the parallel support arms 64. More specifically, as shown in FIGS. 4 and 6, the rail system 60 may include a first sliding component 66 configured with a forward end 37 of the main shaft 34 and a second sliding component 66 configured with the aft end 39 of the main shaft 34, e.g. so as to provide balanced support to main shaft 34 as the shaft 34 is being removed and/or installed. In addition, as shown, the sliding component(s) 66 may be connected between the support component(s) 62 and the main shaft 34. Thus, the sliding component(s) 66 is configured to move horizontally with respect to the support component(s) 66 so as to slide the main shaft 34 between an installed position (FIGS. 4 and 7) and an uninstalled position (FIGS. 6 and 8).

In another embodiment, as shown particularly in FIG. 5, each of the parallel support arms 64 includes a track 65. More specifically, as shown, the rail track 65 of each support arm 64 may be configured the entire length of the arm 64 or only a portion thereof. In such embodiments, each of the sliding components 66 may also include at least one rolling element 67 configured within each track 65 so as to slide thereon. For example, as shown in FIG. 5, the rolling element 67 may include one or more roller bearings 68 configured to slide within the track 65. In addition, as shown, the rolling element 67 may include an attachment location 70, e.g. for at least one strap 72 to be connected between each rolling element 67 and the main shaft 34. In additional embodiments, as shown in FIGS. 4 and 6-8, the straps 72 of the sliding components 66 may be configured circumferentially around the main shaft 34. Alternatively, the straps 72 may be secured to a side location of the main shaft 34. It should be understood that the straps 72 may include any suitable strap, sling, holster, chain, or similar, or combinations thereof. For example, the straps 72 of the illustrated embodiment include a chain 73 connected to each attachment location 70 of the rolling elements 37 with a sling-type strap 72 connected between the chains 72 such that the strap 72 extends circumferentially around the main shaft 34.

In further embodiments, as shown in FIGS. 7 and 8, the parallel support arms 64 may be further supported, e.g. by securing at least one rod component 74 perpendicularly between the parallel support arms 64. More specifically, the rod component 78 may be mounted to each of the parallel support arms 64 so as to create an I-beam configuration that is configured to support the weight of the main shaft 34.

In another embodiment, as shown in FIGS. 4-8, the rail system 60 may also include at least one structural support 76 configured with each of the parallel support arms 64. Further, in such embodiments, the structural supports 76 may be secured to the bedplate 48 of the wind turbine 10, e.g. via one or more fasteners 75. Thus, the structural supports 76 provide further support to the rail system 60 as the main shaft 34 is being removed and/or replaced.

According to the invention, the rail system includes a push/pull component 78 configured to push or pull the main shaft 34 during removal or installation thereof.

For example, as shown in FIGS. 4 and 7, the push/pull component 78 is mounted to a bearing housing 56 of the main shaft 34. More specifically, as shown, the push/ pull component 78 may have parallel rods 80 with a push/pull rod 82 configured perpendicularly therebetween. Thus, the parallel rods 80 may be mounted to the bearing housing 56 and the push rod 82 can slid along the parallel rods 80 so as to assist with movement of the main shaft 34. More specifically, as shown in FIGS. 4 and 7, the push rod 82 is configured to apply a force to the aft end 39 of the shaft 34 so as to push the shaft 34 out of the bearing housing 56. Similarly, during installation, the push rod 82 can be used as a pull rod 82 such that it pulls the shaft 34 into the bearing housing 56.

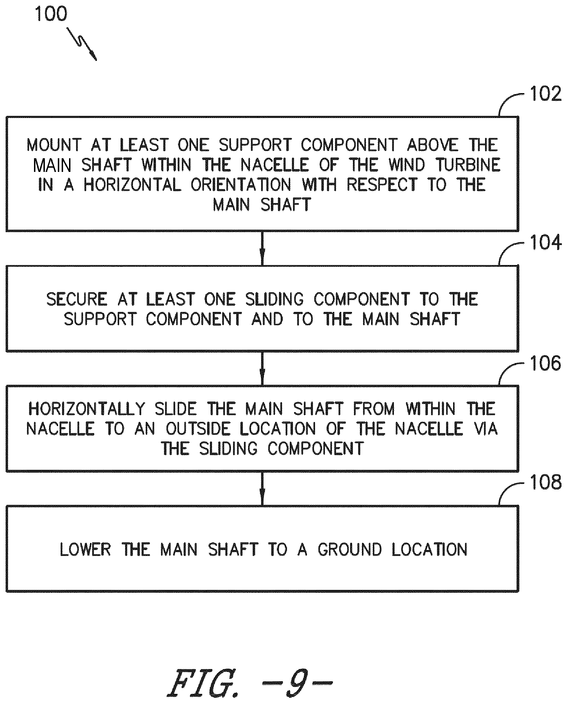

Referring now to FIG. 9, a flow diagram of a non-claimed embodiment of a method 100 for removing the main shaft 34 of the drivetrain assembly 30 of the wind turbine 10 from the nacelle 16 installed atop the tower12 is illustrated. As shown at 102, the method 100 includes mounting at least one support component 62 above the main shaft 34 within the nacelle 16 of the wind turbine 10 in a horizontal orientation with respect to the main shaft 34. More specifically, in certain embodiments, the step of mounting the support component(s) 62 above the main shaft 34 within the nacelle 16 in the horizontal orientation with respect to the main shaft 34 may include securing parallel support arms 64 horizontally with respect to the main shaft 34.

As shown at 104, the method 100 includes securing at least one sliding component 66 to the support component 62 and to the main shaft 34. In addition, as mentioned, each of the parallel support arms 64 may include a rail track 65. Thus, in such embodiments, the step of securing at least one sliding component 66 between the support component 62 and to the main shaft 34 may include securing a rolling element 67 within each of the tracks 65 of the parallel support arms 64, and securing a strap 72 to each rolling element 67 and circumferentially around the main shaft 34.

In another embodiment, the method 100 may include securing at least one rod component 74 perpendicularly between the parallel support arms 64. Further, in additional embodiments, the method 100 may include anchoring the parallel support arms to the nacelle 16. More specifically, the method 100 may include securing a structural support 76 between each of the parallel support arms 64 and the bedplate 48 of the wind turbine 10 via one or more fasteners 75 so as to further support the support arms 64 during removal of the main shaft 34. In further embodiments, the method 100 may also include mounting a push/pull component 78 to the bearing housing 56 of the main shaft 34. Thus, as mentioned, the push/pull component 78 is configured to push or pull the main shaft 34 during removal or installation thereof.

Referring still to FIG. 9, as shown at 106, the method 100 includes horizontally sliding the main shaft 34 from within the nacelle 16 to an outside location of the nacelle 16 via the sliding component 66 (FIG. 6). Further, as shown at 108, the method 100 also includes lowering the main shaft 34 to a ground location. For example, in certain embodiments, the method 100 may include lowering the main shaft 34 to the ground location via a crane.

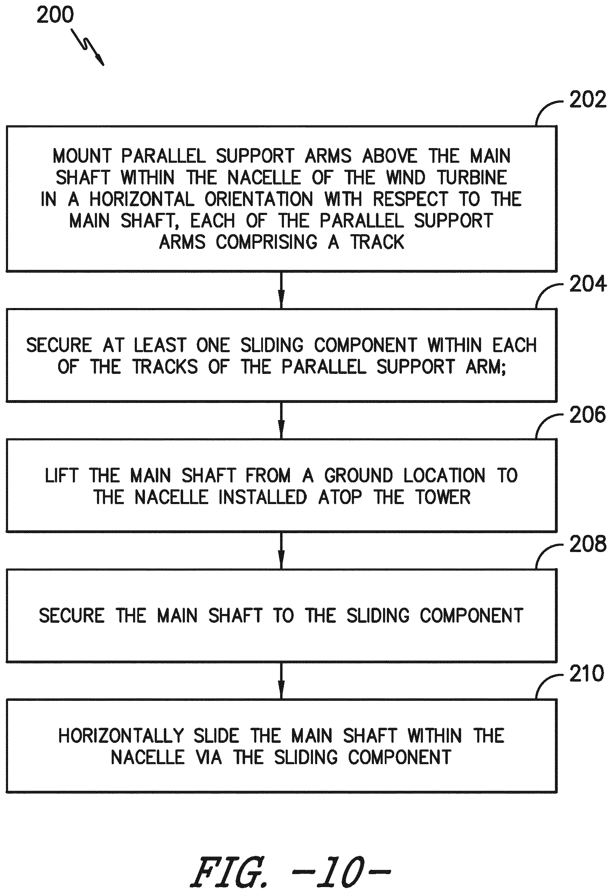

Referring now to FIG. 10, a flow diagram of one embodiment of a method 200 for installing the main shaft 34 of the drivetrain assembly 30 of the wind turbine 10 within the nacelle 16 installed atop the tower12 is illustrated. As shown at 202, the method 200 includes mounting parallel support arms 64 above the main shaft 34 within the nacelle 16 of the wind turbine 10 in a horizontal orientation with respect to the main shaft 34, wherein each of the parallel support arms 64 has a track 65. As shown at 204, the method 200 includes securing at least one sliding component 66 within each of the tracks 65 of the parallel support arms 64. As shown at 206, the method 200 includes lifting the main shaft 34 from a ground location to the nacelle 16 installed atop the tower 12. As shown at 208, the method 200 includes securing the main shaft 34 to the sliding component 66. As shown at 210, the method 200 includes horizontally sliding the main shaft 34 within the nacelle 16 via the sliding component 66.

This written description uses examples to disclose the invention, including the preferred mode, and also to enable any person skilled in the art to practice the invention.

The patentable scope of the invention is defined by the claims.

## Claims

1. A nacelle (16) installed atop a wind turbine tower (12) of a wind turbine (10) including a rail system (60) for removing or installing a main shaft (34) of a drivetrain assembly (30) of the wind turbine (10) to and from the nacelle (16), the rail system (60) comprising:
a plurality of parallel support arms (64) mounted above the main shaft (34) for supporting the main shaft (34) within the nacelle (16), the plurality of parallel support arms each defining a longitudinal axis extending parallel with respect to a longitudinal axis of the main shaft (34), each of the parallel support arms (64) comprising a track (65),
a sliding component (66) arranged within each track (65) of each of the plurality of parallel support arms (64); and
a push/pull component (78) mounted to an aft end of a bearing housing (56) of the main shaft (34);
wherein the sliding components (66) are configured to move horizontally along a respective track (65) so as to slide the main shaft (34) between an installed position and an uninstalled position and the push/pull component (78) is configured to push or pull the main shaft (34) during removal or installation thereof.

2. The nacelle (16) including a rail system (60) of claim 1, wherein each of the sliding components (66) comprises at least one rolling element (67) configured within each track (65).

3. The nacelle (16) including a rail system (60) of claim 2, wherein each of the sliding components (66) further comprises at least one strap (72) connected between each rolling element (67) and the main shaft (34).

4. The nacelle (16) including a rail system (60) of claim 3, wherein the straps (72) are configured circumferentially around the main shaft (34).

5. The nacelle (16) including a rail system (60) of any preceding claim, wherein the parallel support arms (64) are secured to each other via at least one rod component (74) configured perpendicularly with the parallel support arms (64).

6. The nacelle (16) including a rail system (60) of any preceding claim, further comprising a structural support (76) configured with each of the parallel support arms (64).

7. The nacelle (16) including a rail system (60) of claim 6, wherein the structural supports (76) are secured to a bedplate (48) of the wind turbine (10) via one or more fasteners (75).

8. A method for removing or installing a main shaft (34) of a drivetrain assembly (30) of a wind turbine (10) from or to a nacelle (16) installed atop a wind turbine tower (12), the method comprising:
mounting parallel support arms (64) above the main shaft (34) within the nacelle (16) of the wind turbine (10) in a substantially horizontal orientation with respect to the main shaft (34), each of the parallel support arms (64) comprising a track (65);
securing at least one sliding component (66) within each of the tracks (65) and to the main shaft (34);
mounting a push/pull
component (78) to a bearing housing (56) of the main shaft (34);
horizontally sliding the main shaft (34) within or from the nacelle (16) via the sliding component (66), and pushing or pulling the main shaft (34) during removal or installation thereof using the push/ pull component (78).

9. The method of claim 8, further comprising lowering or raising the main shaft (34) to and from the nacelle (16) via a crane.

10. The method of claim 8 or claim 9, further comprising anchoring the parallel support arms (64) to the nacelle (16).

## Patentansprüche

1. Gondel (16), die oberhalb eines Windturbinenturms (12) einer Windturbine (10) installiert ist, mit einem Schienensystem (60) zum Entfernen oder Installieren einer Hauptwelle (34) einer Antriebsstranganordnung (30) der Windturbine (10) an und von der Gondel (16), wobei das Schienensystem (60) Folgendes umfasst:
eine Vielzahl von parallelen Tragarmen (64), die oberhalb der Hauptwelle (34) angebracht sind, um die Hauptwelle (34) innerhalb der Gondel (16) zu tragen, wobei die Vielzahl von parallelen Tragarmen jeweils eine Längsachse definieren, die sich in Bezug auf eine Längsachse der Hauptwelle (34) parallel erstreckt, wobei jeder der parallelen Tragarme (64) eine Führungsschiene (65) umfasst,
eine Gleitkomponente (66), die in jeder Führungsschiene (65) eines jeden aus der Vielzahl der parallelen Tragarme (64) angeordnet ist; und
eine Schub-/Zugkomponente (78), die an einem hinteren Ende eines Lagergehäuses (56) der Hauptwelle (34) angebracht ist;
wobei die Gleitkomponenten (66) so konfiguriert sind, dass sie sich horizontal entlang einer jeweiligen Führungsschiene (65) bewegen, um die Hauptwelle (34) zwischen einer installierten Position und einer nicht installierten Position gleiten zu lassen, und die Schub-/Zugkomponente (78) so konfiguriert ist, dass sie die Hauptwelle (34) während ihres Entfernens oder Installierens schiebt oder zieht.

2. Gondel (16) mit einem Schienensystem (60) nach Anspruch 1, wobei jede der Gleitkomponenten (66) mindestens ein innerhalb jeder Führungsschiene (65) angeordnetes Rollelement (67) umfasst.

3. Gondel (16) mit einem Schienensystem (60) nach Anspruch 2, wobei jede der Gleitkomponenten (66) ferner mindestens einen Riemen (72) umfasst, der zwischen jedem Rollelement (67) und der Hauptwelle (34) verbunden ist.

4. Gondel (16) mit einem Schienensystem (60) nach Anspruch 3, wobei die Riemen (72) in Umfangsrichtung um die Hauptwelle (34) herum konfiguriert sind.

5. Gondel (16) mit einem Schienensystem (60) nach einem der vorhergehenden Ansprüche, wobei die parallelen Tragarme (64) über mindestens eine Stangenkomponente (74), die senkrecht zu den parallelen Tragarmen (64) konfiguriert ist, aneinander befestigt sind.

6. Gondel (16) mit einem Schienensystem (60) nach einem der vorhergehenden Ansprüche, ferner umfassend einen Strukturträger (76), der mit jedem der parallelen Tragarme (64) konfiguriert ist.

7. Gondel (16) mit einem Schienensystem (60) nach Anspruch 6, wobei die Strukturträger (76) über ein oder mehrere Befestigungsmittel (75) an einer Grundplatte (48) der Windturbine (10) befestigt sind.

8. Verfahren zum Entfernen oder Installieren einer Hauptwelle (34) einer Antriebsstranganordnung (30) einer Windturbine (10) von oder an einer Gondel (16), die oberhalb eines Windturbinenturms (12) installiert ist, wobei das Verfahren Folgendes umfasst:
Anbringen von parallelen Tragarmen (64) oberhalb der Hauptwelle (34) innerhalb der Gondel (16) der Windturbine (10) in einer im Wesentlichen horizontalen Ausrichtung in Bezug auf die Hauptwelle (34), wobei jeder der parallelen Tragarme (64) eine Führungsschiene (65) umfasst;
Befestigen mindestens einer Gleitkomponente (66) innerhalb jeder der Führungsschienen (65) und an der Hauptwelle (34);
Anbringen einer Schub-/Zugkomponente (78) an einem Lagergehäuse (56) der Hauptwelle (34);
horizontales Gleiten der Hauptwelle (34) innerhalb oder aus der Gondel (16) über die Gleitkomponente (66) und Schieben oder Ziehen der Hauptwelle (34) während ihres Entfernens oder Installierens unter Verwendung der Schub-/Zugkomponente (78).

9. Verfahren nach Anspruch 8, ferner umfassend das Absenken oder Anheben der Hauptwelle (34) zur und aus der Gondel (16) mittels eines Krans.

10. Verfahren nach Anspruch 8 oder Anspruch 9, ferner umfassend das Verankern der parallelen Tragarme (64) an der Gondel (16).

## Revendications

1. Nacelle (16) installée au sommet d'un mât d'éolienne (12) d'une éolienne (10) comprenant un système de rails (60) pour retirer ou installer un arbre principal (34) d'un ensemble de transmission (30) de l'éolienne (10) vers et depuis la nacelle (16), le système de rails (60) comprenant :
une pluralité de bras de support parallèles (64) montés au-dessus de l'arbre principal (34) pour supporter l'arbre principal (34) à l'intérieur de la nacelle (16), la pluralité de bras de support parallèles définissant chacun un axe longitudinal s'étendant parallèlement à un axe longitudinal de l'arbre principal (34), chacun des bras de support parallèles (64) comportant un rail (65),
un élément coulissant (66) agencé à l'intérieur de chaque rail (65) de chacun de la pluralité de bras de support parallèles (64) ; et
un élément pousser/tirer (78) monté sur une extrémité arrière d'un carter de palier (56) de l'arbre principal (34) ;
dans laquelle les éléments coulissants (66) sont conçus pour se déplacer horizontalement le long d'un rail (65) respectif de manière à faire coulisser l'arbre principal (34) entre une position installée et une position non installée et l'élément pousser/tirer (78) est conçu pour pousser ou tirer l'arbre principal (34) pendant son retrait ou son installation de celui-ci.

2. Nacelle (16) comprenant un système de rails (60) selon la revendication 1, dans laquelle chacun des éléments coulissants (66) comprend au moins un élément roulant (67) conçu à l'intérieur de chaque rail (65).

3. Nacelle (16) comprenant un système de rails (60) selon la revendication 2, dans laquelle chacun des éléments coulissants (66) comprend en outre au moins une sangle (72) raccordée entre chaque élément roulant (67) et l'arbre principal (34).

4. Nacelle (16) comprenant un système de rails (60) selon la revendication 3, dans laquelle les sangles (72) sont conçues circonférentiellement autour de l'arbre principal (34).

5. Nacelle (16) comprenant un système de rails (60) selon l'une quelconque des revendications précédentes, dans laquelle les bras de support parallèles (64) sont fixés les uns aux autres via au moins un élément tige (74) conçu perpendiculairement aux bras de support parallèles (64).

6. Nacelle (16) comprenant un système de rails (60) selon l'une quelconque des revendications précédentes, comprenant en outre un support structural (76) conçu avec chacun des bras de support parallèles (64).

7. Nacelle (16) incluant un système de rails (60) selon la revendication 6, dans laquelle les supports structuraux (76) sont fixés à une plaque d'assise (48) de l'éolienne (10) via une ou plusieurs attaches (75).

8. Procédé pour retirer ou installer un arbre principal (34) d'un ensemble de transmission (30) d'une éolienne (10) depuis ou vers une nacelle (16) installée au sommet d'un mât d'éolienne (12), le procédé comprenant :
le montage de bras de support parallèles (64) au-dessus de l'arbre principal (34) à l'intérieur de la nacelle (16) de l'éolienne (10) dans une orientation sensiblement horizontale par rapport à l'arbre principal (34), chacun des bras de support parallèles (64) comprenant un rail (65) ;
la fixation d'au moins un élément coulissant (66) à l'intérieur de chacun des rails (65) et à l'arbre principal (34) ;
le montage d'un élément pousser/tirer (78) sur un carter de palier (56) de l'arbre principal (34) ;
le coulissement horizontal de l'arbre principal (34) à l'intérieur ou à partir de la nacelle (16) via l'élément coulissant (66), et le fait de pousser ou tirer l'arbre principal (34) lors de son retrait ou de son installation à l'aide de l'élément pousser/tirer (78).

9. Procédé selon la revendication 8, comprenant en outre l'abaissement ou le levage de l'arbre principal (34) vers et depuis la nacelle (16) via une grue.

10. Procédé selon la revendication 8 ou la revendication 9, comprenant en outre l'ancrage des bras de support parallèles (64) à la nacelle (16).
